Europäisches Patentamt

European Patent Office (11) Publication number: **0 075 413**

Office européen des brevets A2

(12) **EUROPEAN PATENT APPLICATION**

(21) Application number: 82304729.5

(22) Date of filing: 08.09.82

(51) Int. Cl.³: **G 06 K 7/08,** G 11 B 5/30

(30) Priority: **12.09.81 GB 8127609**

(71) Applicant: **CHUBB INTEGRATED SYSTEMS LIMITED,
Porters Wood, St. Albans Hertfordshire AL3 6PD (GB)**
Applicant: **Magnetic Components Limited, Penryn,
Cornwall TR10 8AR (GB)**

(43) Date of publication of application: **30.03.83
Bulletin 83/13**

(72) Inventor: **Collins, Alan John, 4 Tyn-y-Cwm Road
Pontymister, Risca Gwent NP1 6NQ (GB)**
Inventor: **Mirfin, Neil Raymond, 15 New Road, Weybridge
Surrey (GB)**
Inventor: **Holter, Godfrey George, 10 Lancot Avenue,
Dunstable Bedfordshire (GB)**

(84) Designated Contracting States: **AT BE CH DE FR IT LI
LU NL SE**

(74) Representative: **Obee, Robert William, Manor House
Manor Lane, Feltham Middlesex TW13 4JQ (GB)**

(54) **Magnetoresistive transducer assemblies.**

(57) A magnetoresistive (MR) card-reading head (2) comprises a sapphire substrate (6) with MR strips (8A, 8B) vapour-deposited on one face (F2). The substrate is mounted in a holder (4) so that the opposite face (F1) thereof is urged into face-to-face contact with magnetically-encoded cards which are passed through a guideway (1), the information on the cards thus being read through the thickness of the substrate (6). This construction is particularly useful in the provision of MR strips (8A, 8B) of crooked configuration, such as are required in high-security readers for access-control equipment.

-1-

## MAGNETORESISTIVE TRANSDUCER ASSEMBLIES

The present invention relates to magnetoresistive (MR) transducer assemblies for use in reading magnetically-recorded information. Transducer assemblies in accordance with the invention may be used in various types of equipment for reading information from magnetic data carriers in the form of tapes or discs, for example. However, the invention is concerned especially with MR transducer assemblies for use in access-control equipment where it is required to read information from a magnetically-encoded strip on a card or the like token which is presented to the equipment and which carries information relevant to the gaining of access to a facility controlled by the equipment – for example, entry of the card holder to a building or other restricted area, or use of a cash-dispensing machine, or some other service.

Magnetoresistive reading heads have been known for some years. The operation of such devices involves disposing an element of suitable material in proximity to the associated magnetic data carrier so that the fields recorded as information thereon cause changes in the flux field around the element and thereby modify its electrical resistance through the magnetoresistive effect. Thus as the data carrier moves in relation to the MR element, the output obtained from an external circuit coupled to that element exhibits electrical fluctuations representative of the information recorded on the data carrier. Hitherto, the successful production and operation of such heads has generally involved sandwiching a thin strip of the MR material between a pair of glass plates or the like substrates and orientating the substrates and strip edge-on to the data carrier. This "edge-on" technique, however, is in general only satisfactory for the production of heads in which the MR element extends in a straight line across the data carrier (in relation to its direction of relative movement) and is not readily amenable to the production of heads with MR elements of crooked configuration - this would require

the assembling together of separate substrate-and-element assemblies and/or the complex and expensive shaping of the substrates to achieve the required configuration. The provision of crooked-configuration magnetic recordings and of reading heads in which the sensitive element (or a combination of sensitive elements) has a corresponding crooked configuration is of advantage from the point of view of security eg in the operation of access-control equipment as is explained (in relation to conventional inductive-type reading heads) in United Kingdom Patent Specifications Nos. 1336131 and 1336132, and it is an aim of the present invention to provide a form of construction for MR reading heads which is readily amenable to the provision of sensitive elements in crooked configurations; heads in accordance with the invention may, however, still employ single, straight-line sensitive elements if desired.

Accordingly in one aspect the invention resides in a magnetoresistive transducer assembly comprising one or more magnetoresistive elements deposited or otherwise provided on one face of a laminar substrate and means for mounting said substrate and element(s) in relation to a guideway or other relative path-defining means for the transducer and a relevant magnetic data carrier such that the opposite face of the substrate is, in use, disposed to be in face-to-face proximity to the data carrier.

The invention also resides in access-control or other equipment in which information is detected from a magnetic data carrier, comprising a magnetoresistive transducer assembly in accordance with the first aspect of the invention and means defining a relative path for the transducer and a relevant data carrier, the transducer assembly being mounted to the equipment so that the aforesaid opposite face of the substrate is disposed to be in face-to-face proximity to the data carrier.

In the production of a transducer according to the invention the MR element(s) can easily be provided on the substrate, eg by known vapour-deposition techniques, in any desired configuration corresponding to the configuration of magnetisation on an associated data carrier, and by virtue of the face-to-face relationship of the substrate with the data carrier it is unnecessary to assemble together separate substrate-and-element assemblies or to form the substrate itself to the same effective shape as the MR element(s) in order to provide a transducer for reading a crooked magnetisation pattern, as would be the case for a conventional "edge-on" MR head.

In use of such a transducer the information recorded on the data carrier is read by the MR element(s) through the thickness of the substrate and, by way of example, it has been found that the resultant spacing of an MR element as more particularly described hereinafter from a data carrier by a distance of up to 0.004" (0.102 mm) permits satisfactory detection of the flux levels normally associated with eg magnetised cards in access-control equipment.

By mounting the transducer assembly with the face of the substrate on the opposite side to the MR element(s) in proximity to the data carrier, the MR element(s) are protected from direct contact with the data carrier and are thus not subject to wear; likewise the risk of damage to the MR element(s) from any foreign matter which might come into the guideway or the like is eliminated. Particularly in the case of a sapphire substrate, the contact surface of such an assembly will be very hard wearing so that the transducer may have a very long service life even though the substrate is relatively thin.

The invention also resides in features of a process for manufacturing a magnetoresistive transducer assembly as is more particularly described hereinafter. Such process may comprise the steps of depositing a magnetoresistive element on one face of a laminar substrate bonding to said one face of the substrate one face of an electrically non-conductive member having on its opposite face terminals for the connection of the magnetoresistive element into an external circuit, and connecting respective such terminals to respective portions of the magnetoresistive element by electrically conductive means extending through an aperture in said electrically non-conductive member.

The invention will now be more particularly described, by way of example, with reference to the accompanying drawings, in which:

Figure 1 is a schematic sectional view of a magnetoresistive reading head in accordance with the invention installed in an access - control unit;

Figure 2 is a plan view of the head and associated mounting means of Figure 1;

Figure 3 shows a portion of Figure 1 to an enlarged scale;

Figure 4 is a plan view of the MR element and other deposits on the substrate of the head of Figures 1 to 3;

Figure 5 is a plan view of the terminal board of the head of Figures 1 to 3; and

Figure 6 is a plan view of the assembled substrate and terminal board of the head of Figures 1 to 3.

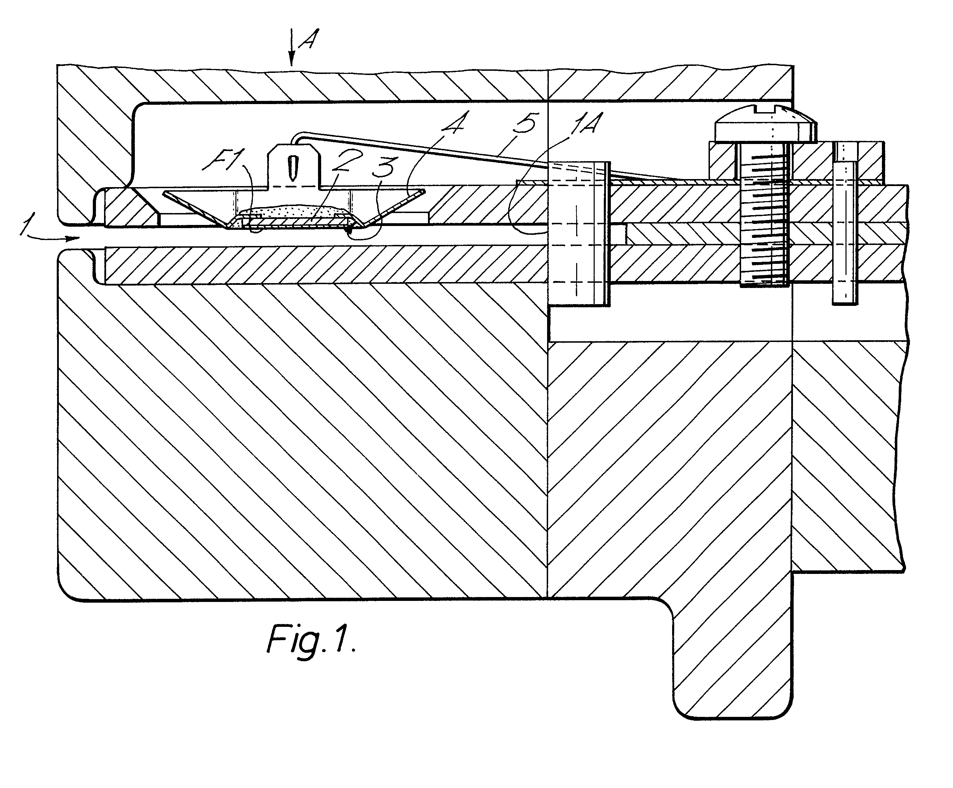

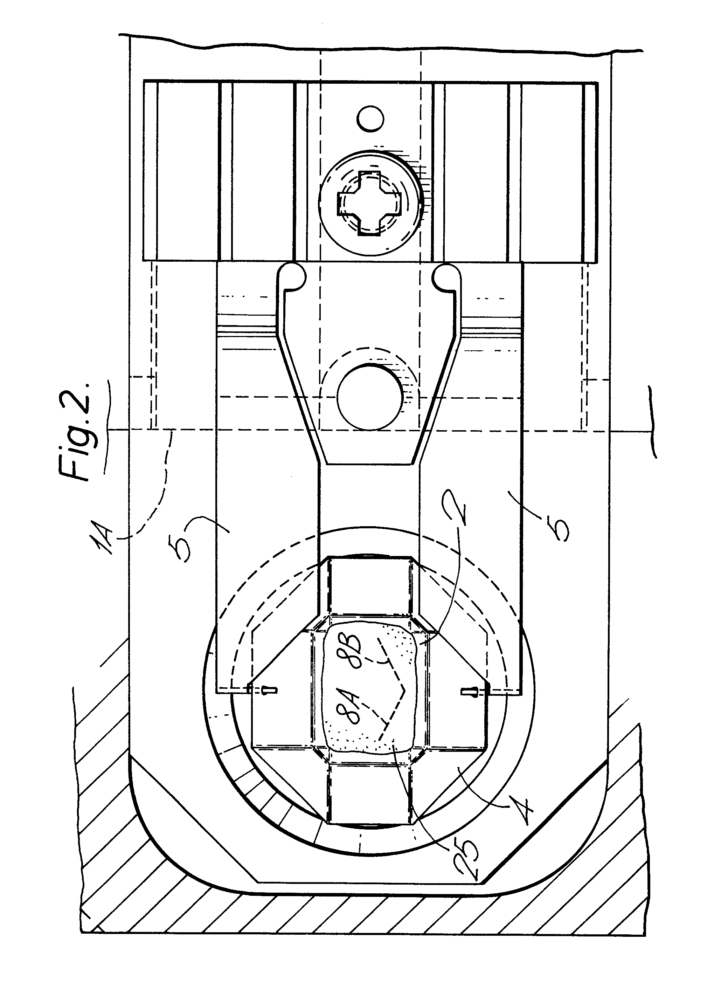

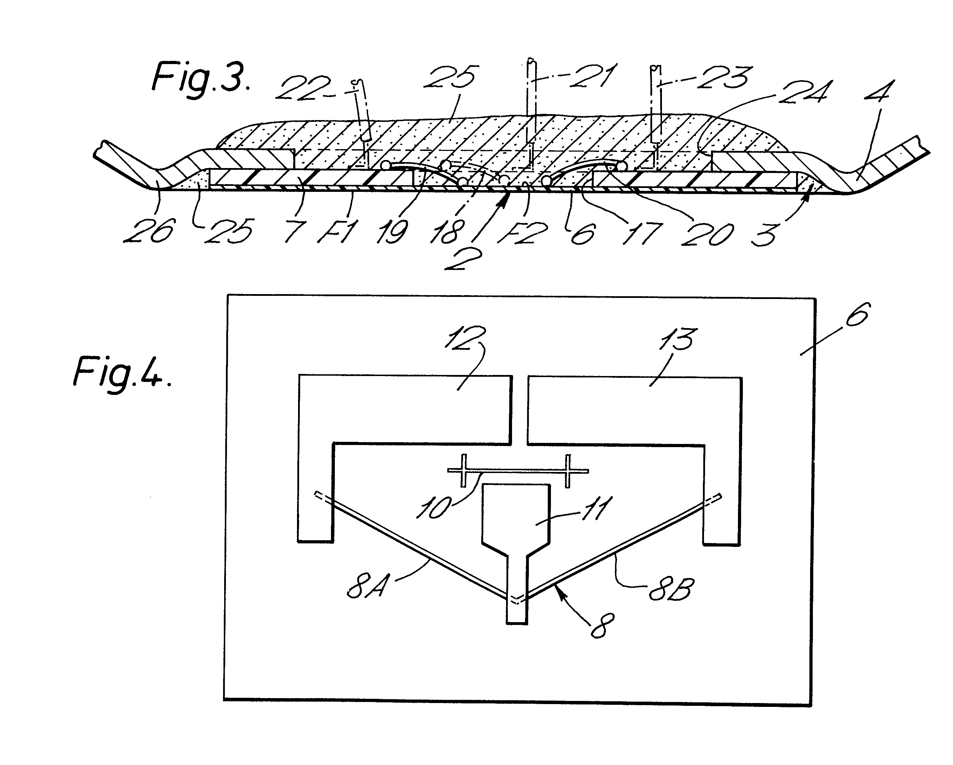

Referring to Figure 1, there is shown part of an access-control unit which is arranged eg to permit entry to a restricted area only in response to the identification of certain magnetically-encoded information on cards which are issued to authorised personnel and which are presented to the unit when entry to that area is "requested". More particularly, the apparatus has an open-sided slot 1 defining a guideway for the cards, a respective card (not shown) being passed through the guideway (in a direction perpendicular to the plane of the paper in relation to Figure 1) to make a request for entry, and so that the face of a magnetically-encoded strip on the card passes in contact with the face F1 of a magnetoresistive reading head 2. The head 2 is mounted in the "well" 3 of a truncated pyramidal carrier 4 (see also Figure 2) eg of beryllium copper and which in the illustrated embodiment is biased by a double-armed leaf spring 5 normally to intrude into the guideway 1 and to press the head 2 lightly against the card as it passes. As shown in Figure 3, the head 2 comprises a laminar sapphire substrate 6, which has an MR element deposited on its "rear" face F2, and which is backed by a terminal board 7.

A process by which the head 2 may be manufactured will now be described.

Firstly, a slice of sapphire typically 0.013" (0.33 mm) thick is taken and an MR element 8 of the configuration shown in Figure 4 is vapour-deposited on one of its faces (to be face F2 in the assembled head). The MR element is in the form of two strips 8A, 8B defining together a shallow "V" and is composed of a ferromagnetic alloy, preferably nickel-iron. The deposit is typically 400 angstroms thick and each strip 8A and 8B may be typically 0.06" (1.52mm) long and 0.001" (0.0254mm) wide. In practice, a plurality of MR elements 8 may be deposited together on a single sapphire slice for ultimate dicing into individual chips 6, for example there may be 56 such elements spaced on a slice 1" by 1¼" (25.4 by 31.75mm). Simultaneously with the deposition of the elements 8 another deposit 10 is made for each chip 6, this constituting a registration mark for use in aligning the respective chip during a later stage of the manufacturing process but having no part to play in the actual functioning of the device. After depositing the elements 8 and marks 10 three gold conductors 11-13 for each chip are vapour-deposited on the same face F2 of the sapphire. These may be typically 500 angstroms thick and comprise a central conductor 11 which connects with the apex of the "V" where the two MR strips 8A and 8B join, and two conductors 12 and 13 connecting with the opposite ends of respective MR strips 8A and 8B.

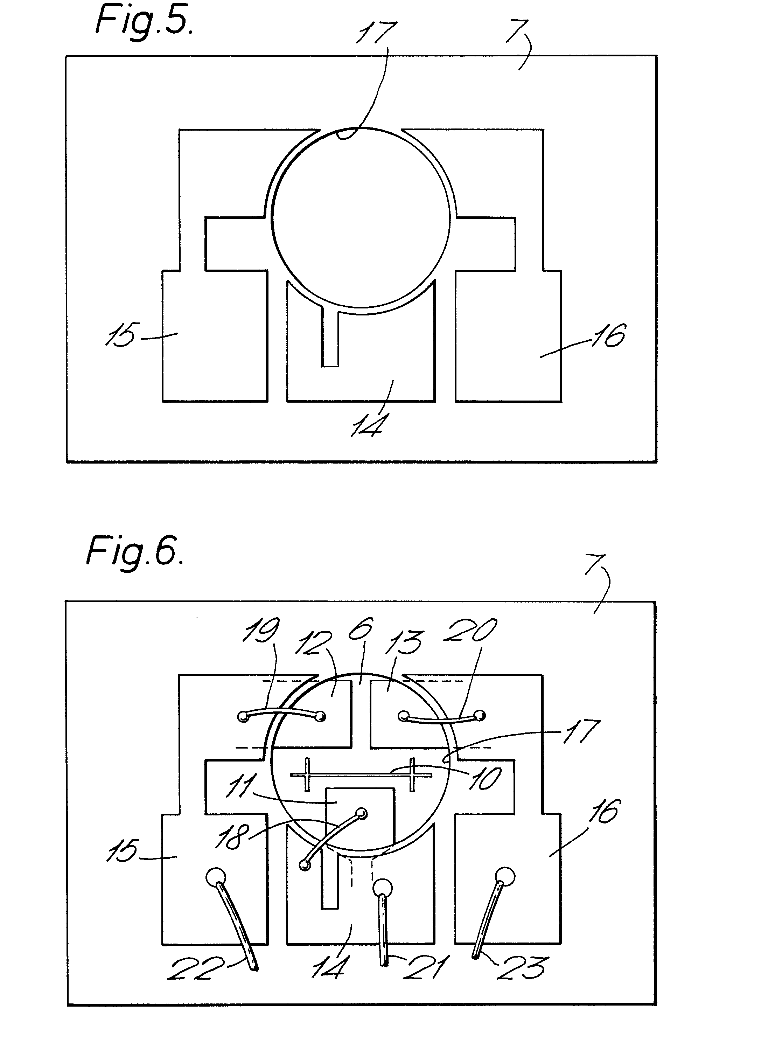

A terminal board 7 of the form shown in Figure 5 is next provided for each sapphire chip. This is typically a 0.016" (0.406mm) thick glass reinforced plastics board with three copper terminals 14-16 provided on one of its faces, and with an aperture 17 through the thickness of the board. As before, there are preferably a plurality of sets of terminals 14-16 provided on a single board for ultimate dicing into individual pieces 7.

Next the sapphire substrate and terminal board are bonded together with the insulating side of the terminal board (ie its face opposite to the face carrying the terminals 14-16) overlying the face F2 of the sapphire upon which the deposits 8,10 and 11-13 have been made. The relationship between each sapphire chip 6 and terminal board 7 is as shown in Figure 6, that is the registration mark 10 and parts of each gold conductor 11-13 on the sapphire chip are visible through the aperture 17 of the terminal board. The resultant assembly is then secured, by a soluble adhesive wax, to a glass block (for ease of handling), with the face F1 of the sapphire outermost, and that face is lapped down to leave the sapphire substrate with a thickness typically of 0.001" (0.0254 mm). The assembly is removed from the glass block by dissolving the wax and then turned over and remounted in similar fashion (ie so that the copper terminals 14-16 of the board 7 are now outermost). At this stage, assuming that a batch of assemblies have been produced together on a single sapphire slice and terminal board, dicing of the batch into individual head assemblies takes place.

With the individual assemblies still mounted on the glass block three gold wires 18-20 are ball bonded between respective conductors 11-13 and terminals 14-16 for each head, as indicated in Figures 3 and 6, access to the conductors 11-13 for this operation being gained through the terminal board aperture 17. Then three leads 21-23 are soldered to the respective terminals 14-16 for each head, for ultimate connection of the MR strips 8A and 8B to the circuitry of the access-control unit.

The complete heads 2 are removed from the glass block and mounted in respective carriers 4. It is important that when a head is finally assembled into the access-control unit the MR strips 8A and 8B are accurately positioned in relation to the reference surface 1A of the guideway 1, to ensure that they correctly register with the magnetised strips on the associated cards during use of the equipment; the positioning of the head 2 within the "well" 3 of the carrier 4 is therefore critical. The carrier 4 together with its spring 5 is mounted in a jig which establishes a datum position for the MR strips 8A and 8B of the head so that when the spring and carrier are subsequently mounted in the access-control unit the MR strips will be correctly positioned. More particularly, the head is placed in the "well" 3 and, with the carrier and spring in the jig, the head is then viewed through a microscope associated with the jig from the direction corresponding to arrow A in Figure 1. From this direction the registration mark 10 on the sapphire substrate 6 is visible through the aperture 17 of the terminal board and an aperture 24 in the floor of the "well" 3 (see Figure 3). The head can then be manipulated in the "well" 3 (the internal perimeter of which exceeds the size of the head) until the mark 10 registers with a graticule of the microscope to establish the desired position of the head. The head is initially fixed in place with a spot of instant adhesive applied around the edge of the aperture 24 and the bond is subsequently completed by means of resin 25 applied over the rear surface of the carrier and head and between the internal perimeter of the "well" 3 and the head. Finally, any excess resin around the edge of the head 2 and any portions of the surrounding carrier wall 26 which exceed the height of the head 2 in the "well" 3 are lapped down to be level with the face F1 of the sapphire substrate 6, the lapping medium used at this time being insufficient, however, to remove any further sapphire material.

As will be appreciated, the head 2 described above provides in effect two sensitive elements, ie the two strips 8A and 8B of the MR deposit 8. In use these two MR strips read information from respective magnetic tracks on the cards which are passed through the guideway 1, the patterns of magnetisation of which must, of course, be mutually inclined at the same angle as the two strips 8A and 8B if the information which they contain is to be intelligible. By way of example, one of the tracks may contain information which is compared, as read, with information stored in the access-control unit, or with information entered therein by means independent of the card when a "request" is made, and between which a predetermined relationship must exist for the unit to provide access to the restricted area; at the same time the other of the tracks may contain information which, as read, must have a predetermined relationship, eg a specified phase relationship, with the information read from the first track for the unit to provide the access requested.

In order to transduce the information encoded in the two tracks a respective constant current source is applied across each of the MR strips 8A and 8B - the source for strip 8A is connected via lead 21, terminal 14, wire 18 and conductor 11 to the "common" end of the strip and via lead 22, terminal 15, wire 19 and conductor 12 to the other end of the strip, and the source for strip 8B is connected via lead 21 etc to the "common" end of the strip and via lead 23, terminal 16, wire 20 and conductor 13 to the other end of the strip. The changes in resistance of the two MR strips caused by the magnetic fields in the respective tracks are then detected as resultant voltage fluctuations across the respective MR strips.

CLAIMS

1.  A magnetoresistive transducer assembly comprising one or more magnetoresistive elements (8A,8B) provided on one face (F2) of a laminar substrate (6), and means (4,5) for mounting said substrate (6) and element(s) (8A,8B) in relation to relative path-defining means (1) for the transducer and a relevant magnetic data carrier, characterised in that the substrate (6) is mounted such that the opposite face (F1) thereof is, in use, disposed to be in face-to-face proximity to the data carrier.

2.  An assembly according to claim 1 wherein the magnetoresistive element(s) (8A,8B) is or are collectively of crooked configuration.

3.  An assembly according to claim 2 wherein said configuration is of V-form.

4.  An assembly according to any preceding claim wherein said substrate (6) is backed by a laminar member (7) of electrically insulative material having terminals (14-16) on its opposite face for connection of said magnetoresistive element(s) (8A,8B) to external circuitry, said element(s) (8A,8B) being connected to said terminals (14-16) by conductors (18-20) extending through at least one aperture (17) through the thickness of said member (7).

5.  A process for manufacturing a magnetoresistive transducer assembly including the steps of providing upon one face (F2) of a laminar substrate (6) one or more magnetoresistive elements (8A,8B), and assembling said substrate (6) and elements (8A,8B) with means (4,5) for mounting the same (6,8A,8B) in relation to relative path-defining means (1) for the transducer and a relevant magnetic data carrier, characterised in that the substrate (6) is mounted such that the opposite face (F1) thereof is, in use, disposed to be in face-to-face proximity to the data carrier.

6. A process according to claim 5 wherein said element(s) (8A,8B) are provided upon the substrate (6) by vapour-deposition.

7. A process according to claim 5 or claim 6 wherein an indicium (10) is provided upon the substrate (6) together with said elements (8A,8B), such indicium being employed subsequently as a visual aid in the alignment of the substrate (6) with the mounting means (4,5).

8. A process according to any one of claims 5 to 7 including the step of bonding to said one face (F2) of the substrate (6), subsequently to the provision of the magnetoresistive elements (8A,8B) thereon, one face of a laminar member (7) of electrically insulative material; said member (7) having terminals (14-16) on its opposite face for connection of said elements (8A,8B) to external circuitry; and connecting said elements (8A,8B) to said terminals (14-16) by conductors (18-20) extending through at least one aperture (17) through the thickness of said member (7).

0075413

9.   A process according to claims 7 and 8 wherein said
     indicium (10) is viewed through a said aperture
     (17) during the alignment of the substrate (6) with
     the mounting means (4,5).

10.  A magnetoresistive transducer assembly
     characterised in that it is manufactured by a
     process according to any one of claims 5 to 9.

11.  Equipment in which information is detected from a
     magnetic data carrier, comprising a
     magnetoresistive transducer assembly and means (1)
     defining a relative path for the transducer and a
     relevant data carrier, characterised in that the
     transducer assembly is in accordance with any one
     of claims 1 to 4 or 10.

12.  Equipment according to claim 11, being access-
     control equipment.

Fig.1.

Fig.2.

2/4

0075413

Fig.3.

22  25  21  23  24  4

26  25  7  F1  19  18  F2  6  17  20  3
2

Fig.4.

12  13  6

10  11

8A  8B  8

3/4

0075413

0075413

Fig.5.

17

7

15

16

14

Fig.6.

19  12  6  13  20

7

17

11  10

18

15

16

22  14  21  23